(19) Europäisches Patentamt

European Patent Office

Office européen des brevets

(11) Veröffentlichungsnummer: **0 508 102 B1**

(12) **EUROPÄISCHE PATENTSCHRIFT**

(45) Veröffentlichungstag der Patentschrift: **12.04.95**

(51) Int. Cl.⁶: **B23K 33/00**

(21) Anmeldenummer: **92103728.9**

(22) Anmeldetag: **05.03.92**

(54) Verfahren zum Nahtschweissen von Blechzuschnitten.

(30) Priorität: **09.04.91 CH 1045/91**

(43) Veröffentlichungstag der Anmeldung:
**14.10.92 Patentblatt 92/42**

(45) Bekanntmachung des Hinweises auf die
Patenterteilung:
**12.04.95 Patentblatt 95/15**

(84) Benannte Vertragsstaaten:
**AT CH DE ES FR GB IT LI SE**

(56) Entgegenhaltungen:
**DE-C- 661 009**
**DE-U- 8 326 994**
**FR-A- 2 195 497**
**NL-A- 6 410 540**

**WELDING AND METAL FABRICATION Bd. 37,
Nr. 2, Februar 1969, HAYWARDS HEATH GB
Seiten 64-65 ; J.E. JUBB : "WELDING TECH-
NOLOGY DATE".**

(73) Patentinhaber: **ELPATRONIC AG**
**Baarerstrasse 112**
**CH-6300 Zug (CH)**

(72) Erfinder: **Urech, Werner**
**Rheingasse 28**
**CH-8434 Kaiserstuhl (CH)**

## Beschreibung

Die Erfindung betrifft ein Verfahren zum Quetschnahtschweissen von ungleich dicken Blechzuschnitten. Vor allem beim sogenannten Platinenschweissen, bei dem zwei oder mehrere Blechzuschnitte oder -tafeln zu grösseren Tafelkonfigurationen zusammengefügt werden, ist es in zunehmendem Masse erforderlich, auch Bleche von unterschiedlicher Dicke und Oberflächenbeschaffenheit miteinander zu verschweissen. Die angewendeten Schweissverfahren begegnen dabei jedoch spezifischen Schwierigkeiten:

Beim Quetschnahtschweissen (Sonderform der elektrischen Widerstands-Rollnahtschweissung zwischen zwei Elektrodenrollen) stellt sich die Zone mit der höchsten Temperatur etwa symmetrisch zwischen den Kontaktflächen der Elektroden ein; bei Blechen stark unterschiedlicher Dicke entsteht somit diese Zone überwiegend innerhalb des Querschnittes des dickeren Bleches, also versetzt zur Fügeebene zwischen den einander überlappenden Blechrändern. Um dennoch ein sicheres Verschweissen beider Ränder zu erzielen, ist eine erhöhte elektrische Leistung erforderlich, und es kann nur mit erheblich herabgesetzter Geschwindigkeit geschweisst werden (verglichen mit dem Schweissen gleich dicker Bleche). Die asymmetrische Lage der Zone mit der höchsten Temperatur kann auch bewirken, dass von den Blechrändern ausgehende, mehr oder weniger tiefe, ungenügend verschweisste Spalte bestehen bleiben, die hinsichtlich Korrosion und mechanischer Festigkeit (Wechselbelastung und Umformbarkeit) unerwünscht sind. Schliesslich sind auch die Verdickung und/oder der Dickensprung längs der Quetschnaht relativ gross, was wiederum Probleme z.B. beim nachfolgenden Tiefziehen der geschweissten Werkstücke verursachen kann.

Beim Stumpfnahtschweissen mittels Zusatzwerkstoff ist es an sich bekannt, an einander gegenüberstehenden Rändern ungleich dicker Bleche die vorstehenden Kanten abzuarbeiten, um die Nahtbildung (Abschmelzen des Zusatzwerkstoffs) zu erleichtern und die Spannungskonzentration in der Naht zu mindern ("Welding and Metal Fabrication", Bd. 37 Nr. 2, Februar 1969, Haywards Heath GB, S. 64, 65; "Handbuch der Schweisstechnik", J. Ruge, Band III, Springer-Verlag 1985, S. 53). Beim Quetschnahtschweissen - immer verbunden mit einer wesentlichen plastischen Verformung der sich überlappenden Blechränder - gelten indessen völlig andere Ueberlegungen: Hier kommt es vor allem auf die richtige Lage der Schweisszone in bezug auf die Fügeebene zwischen den Blechrändern an.

Mit der Erfindung sollen die erwähnten Schwierigkeiten, wie sie beim Quetschnahtschweissen von ungleich dicken Blechzuschnitten ohne Zusatzmaterial auftreten, überwunden werden. Insbesondere soll die Vorschubgeschwindigkeit derjenigen beim Nahtschweissen von Blechen gleicher Stärke angeglichen werden, und die Qualität der Schweissnaht soll besser beherrscht, d.h. produktionssicherer werden.

Diese Aufgabe wird mit dem erfindungsgemässen Verfahren dadurch gelöst, dass als Vorbereitung zum Schweissvorgang mindestens der dickere der beiden Blechzuschnitte in seinen überlappend zu verschweissenden Randbereichen in seiner Dikke soweit vermindert wird, dass eine Schweisszone mit im wesentlichen gleich dicken Blechrändern gebildet wird. Damit werden einerseits im Bereich der Schweissnaht ähnlich symmetrische Verhältnisse wie beim Verschweissen gleich dicker Bleche geschaffen, was den Ma-Maschinenbetrieb in einem weiteren, unkritischen Parameterbereich erlaubt. Darüber hinaus gewinnt man aber namhafte weitere Vorteile: Die Verdickung im Nahtbereich ist relativ gering, wobei die eine Werkstückseite praktisch eben bleibt (was bisher kaum gelang). Bezüglich der Werkstückeigenschaften (mechanische Festigkeit bei Wechselbelastung, Umformbarkeit, Korrosionseigenschaften der Verbindung) ist es sehr von Vorteil, dass der Dickenübergang nicht mehr mit der Schweissnaht zusammenfällt, sondern seitlich in den homogenen Bereich des dickeren Bleches verlegt ist. Ferner wird mit der vorbereitenden Bearbeitung (mindestens am einen Blech) gleichzeitig eine allenfalls vorhandene Oxidschicht, Walzhaut, ein Metallüberzug (z.B. Zink) oder eine nichtmetallische Beschichtung abgetragen und so für die Schweissung eine blanke Oberfläche erzielt.

Insgesamt kann mit dem erfindungsgemässen Verfahren das Nahtschweissen ungleich dicker Blechzuschnitte wesentlich besser als bisher beherrscht und die Schweissgeschwindigkeit erhöht werden. Vor allem dem Platinenschweissen bzw. der konstruktiven Gestaltung und Anwendung verschweisster Blechzuschnitte werden dadurch neue Möglichkeiten eröffnet.

Besondere weitere Ausgestaltungen des im Patentanspruch 1 definierten, erfindungsgemässen Verfahrens sind in den Ansprüchen 2 bis 4 angegeben.

Nachstehend werden Ausführungsbeispiele der Erfindung im Zusammenhang mit der Zeichnung näher erläutert.

Fig. 1
zeigt schematisch die Kantenbereiche zweier ungleich dicker Blechzuschnitte bei der Vorbereitung zum Schweissvorgang,

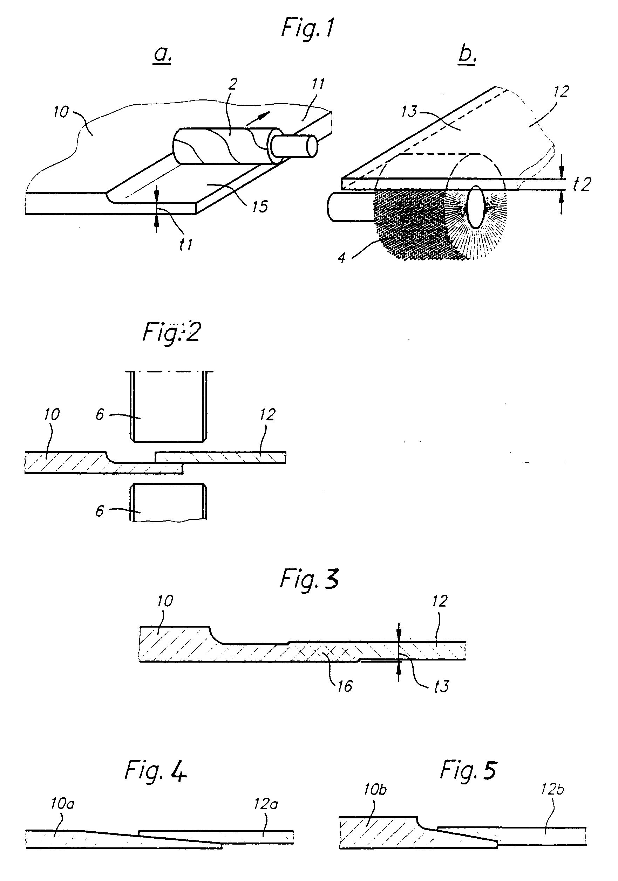

Fig. 2
veranschaulicht schematisch die Situation vor dem Quetschnaht- (Rollnaht-)schweissen und

Fig. 3

zeigt, in etwas grösserem Massstab, einen Querschnitt durch die mit der Anordnung nach Fig. 2 hergestellte Quetschnaht, und

Fig. 4 und Fig. 5 zeigen Beispiele dickenvermindernder Randbearbeitung an beiden Blechzuschnitten in Vorbereitung zum Quetschnahtschweissen.

In Fig. 1a ist eine Partie eines dickeren Blechzuschnitts 10 und in Fig. 1b eine Partie eines dünneren Blechzuschnitts 12 dargestellt. Die Randbereiche 11 bzw. 13 dieser Blechzuschnitte sind dazu bestimmt, miteinander durch Nahtschweissung verbunden zu werden. Gemäss Fig. 1a wird als Vorbereitung zum Schweissvorgang der Randbereich 11 des dickeren Zuschnitts 10 bearbeitet, um seine Dicke zu vermindern. Wie dargestellt, wird zweckmässigerweise Material im Randbereich in der Dicke abgetragen, so dass ein Lappen mit bearbeiteter, blanker Oberfläche 15 entsteht, dessen Dicke t1 etwa der Dicke t2 des dünneren Blechzuschnitts 12 entspricht. Der Materialabtrag kann beispielsweise mittels eines in Längsrichtung des Randes bewegten Fräsers 2 erfolgen, aber auch durch Schleifen, Hobeln, Schälen usw. Grundsätzlich ist auch eine spanlose Umformung des Randbereiches denkbar, z.B. mittels eines Press- oder Schlagstempels. Beim Beispiel nach Fig. 1a erfolgt die Bearbeitung so, dass der entstandene Lappen überall gleich dick ist bzw. die bearbeitete Oberfläche 15 parallel zur gegenüberliegenden Aussenfläche des Bleches verläuft.

Es kann zweckmässig sein, gemäss Fig. 1b den Randbereich 13 des dünneren Blechzuschnitts 12 an der Oberfläche zu bearbeiten, z.B. wie an sich bekannt mittels einer rotierenden Bürste 4. Hier handelt es sich um eine Bearbeitung ohne nennenswerte Dickenverminderung, lediglich zur Gewährleistung eines guten metallischen Kontakts beim Quetschnahtschweissen; der überlappend zu verschweissende Randbereich 13 wird mindestens auf der Seite der Fügeebene (hier die Unterseite), gegebenenfalls auch auf der gegenüberliegenden Seite im Kontaktbereich der Elektrodenrollen, bearbeitet. Es kann sich dabei lediglich um eine mechanische Oberflächenreinigung, z.B. Entzunderung, oder um das Entfernen eines Metallüberzugs oder einer nichtmetallischen Beschichtung handeln. Auch am dickeren Zuschnitt 10 kann eine an sich bekannte Oberflächenbearbeitung auf der der Dickenverminderung gegenüberliegenden Seite (Unterseite in Fig. 1a) im Hinblick auf einen guten Elektrodenkontakt bzw. zur Vermeidung der Elektrodenverschmutzung in Betracht kommen. Ebenfalls ist es sogar denkbar, am dickeren Zuschnitt 10 die dickenvermindernde Bearbeitung auf beiden Seiten vorzunehmen, d.h. den Materialabtrag auf beide Seiten zu "verteilen".

Fig. 2 zeigt die gemäss Fig. 1 vorbereiteten Blechzuschnitte 10 und 12 zwischen zwei Elektrodenrollen 6 für das Quetschnahtschweissen positioniert. Der Randbereich 13 des dünneren Zuschnitts 12 überlappt den in der Dicke verminderten Randbereich des Zuschnitts 10 zweckmässigerweise auf der bearbeiteten, blanken Seite. Ausgehend von dieser Positionierung erfolgt die Quetschnahtschweissung in an sich bekannter Weise durch Gegeneinanderpressen der Elektrodenrollen 6 und Längsvorschub der Zuschnitte 10, 12 in Richtung ihres Randes.

Eine mit der Anordnung nach Fig. 2 hergestellte Quetschnaht 16 ist in Fig. 3 schematisch im Querschnitt dargestellt. Dank der beschriebenen Vorbereitung zur Dickenangleichung der zu verschweissenden Randbereiche bestehen beim Verschweissen der ungleich dicken Zuschnitte 10 und 12 praktisch gleich günstige Verhältnisse wie beim Nahtschweissen von Zuschnitten gleicher oder annähernd gleicher Dicke. Im Schweissbereich 16 bildet sich eine gut beherrschbare, praktisch symmetrische Schweisszone aus, und es kann im wesentlichen mit der selben hohen Vorschubgeschwindigkeit und gleichen weiteren Schweissparametern (Schweissstrom, Elektrodenpressung, Ueberlappungsbreite usw.) wie beim Quetschnahtschweissen von gleich dicken Blechzuschnitten gefahren werden. Für die Gebrauchseigenschaften des geschweissten Produkts (Platine) ist es vor allem wichtig, dass die Dicke t3 der Quetschnaht 16 relativ gering bleibt. Es ist ohne weiteres möglich, Quetschnähte von höchstens 1,4-facher Dicke (oder auch wesentlich weniger), bezogen auf die mittlere Dicke (t1 + t2)/2 der verschweissten Randbereiche, zu erzielen. Daraus ergibt sich auch, dass die eine Seite der geschweissten Platine praktisch eben ist (Unterseite in Fig. 3). Solche Platinen lassen sich auch im Bereich der Schweissnaht ohne besondere Schwierigkeiten tiefziehen oder anderweitig plastisch verformen.

Die Fig. 4 und 5 zeigen Beispiele für Konturquerschnitte von verschieden dicken Blechen 10a, 12a bzw. 10b, 12b, an denen beide zu verschweissenden Randbereiche dickenvermindernd bearbeitet worden sind (Darstellung in überlappter Position, aber vor dem Verschweissen). Beiden Beispielen ist gemeinsam, dass die Randbereiche beider Blechzuschnitte unter gleichem Winkel zur Blechebene geneigt spanabhebend bearbeitet sind. Diese Art Vorbereitung kann vor allem dann zweckmässig sein, wenn der dünnere Zuschnitt 12a bzw. 12b eine das Verschweissen behindernde Walzhaut oder z.B. einen metallischen Ueberzug oder eine nichtmetallische Beschichtung aufweist.

## Patentansprüche

1. Verfahren zum Quetschnahtschweissen von ungleich dicken Blechzuschnitten (10, 12), dadurch gekennzeichnet, dass als Vorbereitung zum Schweissvorgang mindestens der dickere (10) der beiden Blechzuschnitte in seinen überlappend zu verschweissenden Randbereichen (11) in seiner Dicke (t) soweit vermindert wird, dass eine Schweisszone (16) mit im wesentlichen gleich dicken Blechrändern gebildet wird.

2. Verfahren nach Anspruch 1, dadurch gekennzeichnet, dass der Randbereich (13) des dünneren Blechzuschnitts (12) an der Oberfläche mindestens auf der der Fügeebene zugekehrten Seite im wesentlichen ohne Dickenverminderung bearbeitet wird.

3. Verfahren nach Anspruch 1, dadurch gekennzeichnet, dass der überlappend zu verschweissende Randbereich des dickeren Blechzuschnitts (10) oder beider Blechzuschnitte (10a, 12a; 10b, 12b) spanabhebend bearbeitet wird.

4. Verfahren nach Anspruch 3, dadurch gekennzeichnet, dass die überlappend zu verschweissenden Randbereiche beider Blechzuschnitte (10a, 12a; 10b, 12b) unter einem Winkel zur Blechfläche geneigt bearbeitet werden.

## Claims

1. Process for the mash seam welding of cut-to-size metal sheets (10, 12) of unlike thickness, characterised in that as preparation for the welding operation at least the thicker (10) of the two cut-to-size metal sheets is reduced to such an extent in its thickness (t) in its edge regions which are to be joined by welding in overlapping manner that a weld zone (16) is formed which has metal sheet edges of substantially like thickness.

2. Process according to claim 1, characterised in that the edge region (13) of the thinner cut-to-size metal sheet (12) is processed substantially without thickness reduction at its surface at least at the side facing towards the join plane.

3. Process according to claim 1, characterised in that the edge region, which is to be joined by welding with overlapping, of the thicker cut-to-size metal sheet (10) or of both the metal sheets (10a, 12a; 10b, 12b) is processed with removal of material.

4. Process according to claim 3, characterised in that the edge regions which are to be joined by welding in overlapping manner of the two cut-to-size metal sheets (10a, 12a; 10b, 12b) are processed with an inclination at an angle relatively to the metal sheet face.

## Revendications

1. Procédé de soudage continu par serrage de flans de tôle (10, 12) d'épaisseurs différentes, caractérisé en ce qu'à titre de préparation à l'opération de soudage, l'épaisseur (t) d'au moins le plus épais (10) des deux flans de tôle est réduite, dans ses zones marginales (11) qui doivent être soudées à recouvrement, dans une mesure telle qu'il se forme une zone soudée (16) comportant des rives de tôle d'épaisseurs pratiquement identiques.

2. Procédé selon la revendication 1, caractérisé en ce que la zone marginale (13) du flan de tôle (12) plus mince est soumise en surface, au moins sur la face tournée vers le plan de joint, à un traitement pratiquement sans réduction d'épaisseur.

3. Procédé selon la revendication 1, caractérisé en ce que la zone marginale, à souder à recouvrement, du flan de tôle (10) plus épais ou celles des deux flans de tôle (10a, 12a; 10b, 12b) est ou sont soumises à un traitement par enlèvement de copeaux.

4. Procédé selon la revendication 3, caractérisé en ce que les zones marginales, à souder à recouvrement, des deux flans de tôle (10a, 12a; 10b, 12b) sont soumises à un traitement d'une manière inclinée en faisant un angle vis-à-vis de la surface des tôles.

EP 0 508 102 B1

Fig.1

a.

b.

Fig.2

Fig.3

Fig.4

Fig.5

5